Europäisches Patentamt

European Patent Office

Office européen des brevets

(11) Publication number: **0 269 365**
**A2**

## (12) EUROPEAN PATENT APPLICATION

(21) Application number: 87310207.3

(51) Int. Cl.⁴: **G02B 6/10**

(22) Date of filing: 19.11.87

(30) Priority: 21.11.86 JP 278210/86

(43) Date of publication of application:
01.06.88 Bulletin 88/22

(84) Designated Contracting States:
CH DE FR GB LI

(71) Applicant: SEIKO INSTRUMENTS INC.
31-1, Kameido 6-chome Koto-ku
Tokyo 136(JP)

(72) Inventor: Takemura, Yasuhiro
31-1, Kameido, 6-chome
Koto-ku Tokyo(JP)
Inventor: Takesue, Toshiharu
31-1, Kameido, 6-chome
Koto-ku Tokyo(JP)

(74) Representative: Miller, Joseph et al
J. MILLER & CO. Lincoln House 296-302 High
Holborn
London WC1V 7JH(GB)

(54) Optical wave guide.

(57) An optical wave guide having at least one wave guide portion (1) which is clad by a cladding portion (2) between whose refractive index and that of the wave guide portion (1) there is a refractive index difference characterised in that the refractive index difference increases as the wavelength of the light propagated through the wave guide increases.

# F I G. 2

EP 0 269 365 A2

## "OPTICAL WAVE GUIDE"

The present invention relates to an optical wave guide and, although the invention is not so restricted, it relates more particularly to an optical wave guide coupler (hereinafter referred to as an optical coupler) having a plurality of wave guide portions each of which is clad by a cladding portion. Such wave guide portions may, for example, be constituted by planar optical wave guides or by optical fibres. Such an optical wave guide may be used in optical communication networks or for optical measurements.

The difference in the refractive index between a light guiding member and a cladding member in a known optical coupler is almost constant over the range of wavelengths between visible rays and near-infrared rays. Consequently, in a known optical coupler, the spot size of the propagation mode (the width of the expansion of the electromagnetic field) increases in proportion to the increase of the wavelength. Moreover, the coupling coefficient of the known optical coupler varies in simple linearity in response to the change of the wavelength, and therefore a desired coupling coefficient and splitting or divergence ratio can be obtained only over a very narrow wavelength range.

A low wavelength dependent 3 dB coupler using a complex structure has been described in AIAN, J.: "A new idea for wavelenth-insensitive fibre couplers", IEE Electronics Division Colloquium on Advance Fibre Waveguide Devices, May 1986. However, this has a relatively large excess loss. As described above, in a known optical coupler, the coupling coefficient and splitting ratio which it is desired to obtain are limited to a very narrow wavelength range and consequently such a coupler is not suitable for spectrum measurement or propagation of multiple wavelengths. Even when a coupler is made less wavelength dependent by providing it with a complex structure, the excess loss is large.

According, therefore, to the present invention, there is provided an optical wave guide having at least one wave guide portion which is clad by a cladding portion between whose refractive index and that of the wave guide portion there is a refractive index difference characterised in that the refractive index difference increases as the wavelength of the light propagated through the wave guide increases.

Preferably, the wave guide is an optical coupler having a plurality of parallel wave guide portions each of which is clad by a cladding portion.

In one embodiment, the or each wave guide portion clad by a cladding portion is constituted by optical fibre material.

In another embodiment, the or each wave guide portion comprises a planar optical guide.

The optical wave guide may be an optical coupler whose coupling coefficient remains substantially constant over a wavelength range of at least $0.2\mu m$. The optical wave guide may also be an optical coupler having a splitting ratio of substantially ±1 over a wavelength range of at least $0.2\mu m$.

When two optical fibres or planar wave guides are arranged adjacent to and parallel to each other, the electromagnetic field of the fundamental mode extends between the propagation guides, and the luminous energy couples with an extremely low excess loss. If it is desired that the optical coupling occurs to a constant extent, the spot size of the mode has to be kept constant. If the difference in refractive index between the light guiding member and the cladding member is almost constant with respect to the change of the wavelength, the spot size enlarges as the wavelength increases and thus the coupling coefficient changes. On the other hand, if in accordance with the present invention materials for the light guiding member and the cladding member are chosen so that the refractive index difference between these two materials increases according to the increase of the wavelength, the spot size can be kept constant over a relatively wide wavelength range (a range of about 400nm). Accordingly, an optical coupler of this type can obtain an almost constant coupling coefficient and an almost constant splitting ratio over the abovementioned wide wavelength range.

The invention is illustrated, merely by way of example, in the accompanying drawings, in which:-

Figure 1 is a graph showing the variation of the refractive indices of the materials used in an embodiment of the invention with respect to the wavelength,

Figure 2 is a schematic sectional view of an embodiment of an optical coupler according to the present invention,

Figure 3 is a graph showing the relationship between the coupling coefficient and the wavelength for a known optical coupler and for an embodiment according to the present invention, and

Figure 4 is a graph which shows the relationship between the splitting ratio of the wavelength of a known splitter and that of an embodiment according to the invention.

The present invention is hereunder described in detail with reference to preferred embodiments.

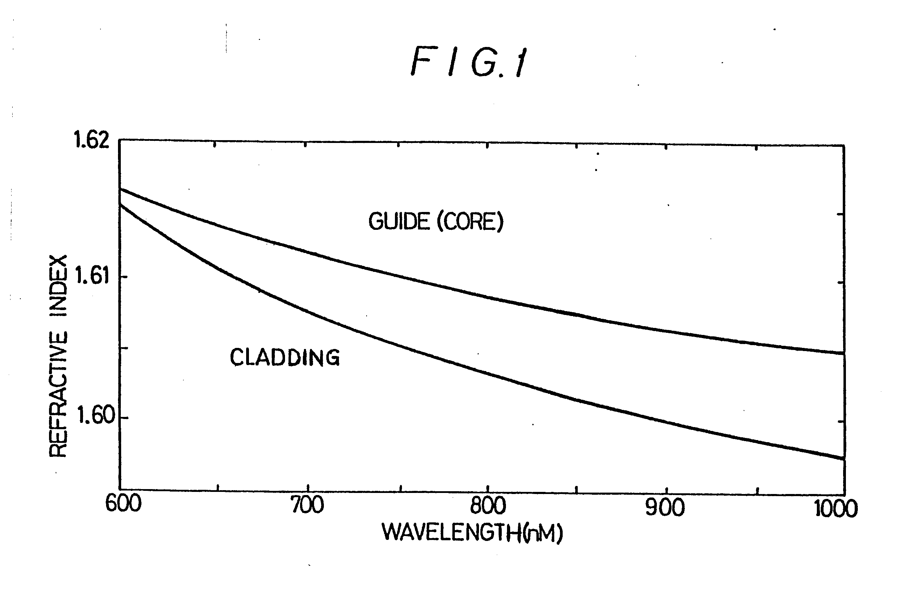

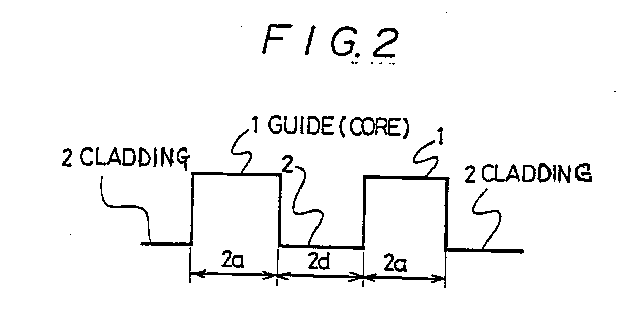

Figure 1 shows the variation with wavelength of the refractive indices of the guide (core) and cladding portions of an optical fibre coupler which is shown in Figure 2 and which is to be used for calculating the propagation modes of an optical fibre coupler. Here, the refractive index of each of two light guide members or optical fibre cores 1 are larger than that of its cladding member 2. The diameter of each light guide member 1 is $2\underline{a}$, and the light guide members 1 are placed at a distance $2\underline{d}$ apart from each other. SSKI of Schott Co. and TiF6 of Schott Co. are chosen as the materials for the two optical fibre cores 1 and for the cladding members 2 respectively. As will be seen from Figure 1, the refractive index difference between the refractive index of each light guide member 1 and that of its respective cladding member 2 increases as the wavelength of the light propagated through the optical coupler increases.

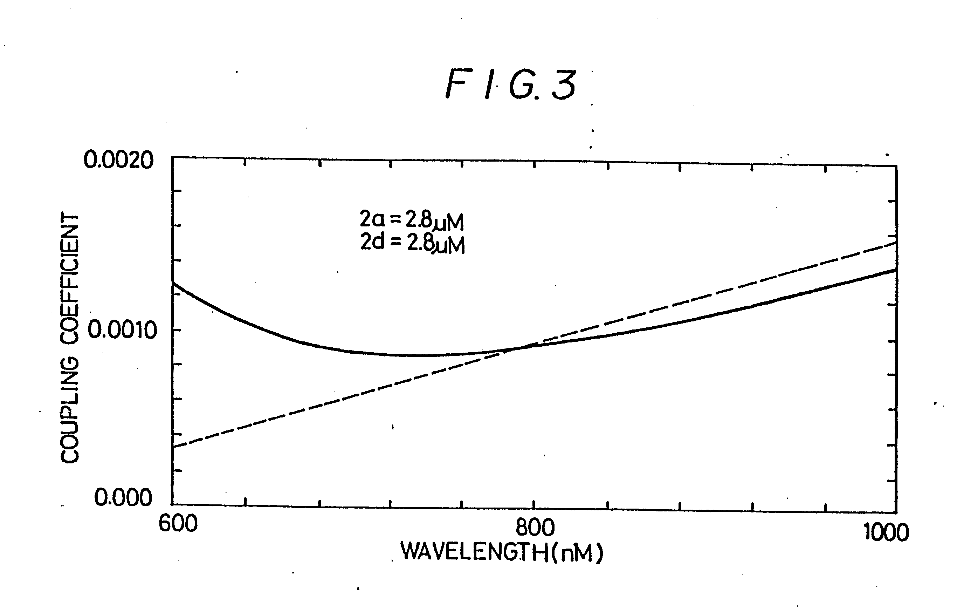

When the refractive indices of the light guiding members (cores) 1 and the cladding member 2 are defined as $n_{co}$ and $n_{cl}$) respectively, the refractive index difference between the two members as defined as $(n_{co} \bullet n_{cl})/n_{co}$. In this embodiment, the refractive index difference between the two materials increases from 0.16% at the wavelength 0.644μm to 0.47% at the wavelength 1.014μm. The coupling coefficient of this structure is shown as a solid line in Figure 3.

Generally the refractive index and the coupling coefficient have the following relationship:-

$$(1) \qquad C = \frac{(2\triangle)^{1/2}}{a} \frac{U^2}{V^3} \frac{Ko(W \cdot d/a)}{K_1{}^2(W)}$$

where $\underline{d}$ is the distance between the centres of the two cores 1; $\underline{k}$ is the propagation coefficient in the formulae referred to below; Ko is a modified Bessel function of a first kind; $K_1$ is a modified Bessel function of a second kind; and U,V and W are well known fibre parameters which are defined as follows:

$$U = \sqrt{k^2 n_{co}^2 - \beta^2} \cdot a$$

$$W = \sqrt{\beta^2 - k^2 n_{cl}^2} \cdot a$$

$$V = k \cdot a \cdot n_{co} [2\triangle]^{1/2}$$

$$\triangle = [n_{co}^2 - n_{cl}^2]/2n_{co}^2$$

where $\underline{a}$ is the core radius, and $\beta$ is the propagation coefficient of the fundamental mode in the direction of the axis of the optical fibre.

When the above parameters are substituted in the equation (1), the following equation (2) is obtained:

$$(2) \qquad C = \frac{1}{a^2} \frac{1}{k^3} \frac{1}{n_{co} \cdot (n_{co}^2 - n_{cl}^2)} (k^2 n_{co}^2 - \beta^2) \frac{Ko(W \cdot d/a)}{K_1{}^2(W)}$$

As seen clearly from the equation (2), C is defined as follows:

$$(3) \qquad C \propto \frac{1}{k} \frac{n_{co}}{n_{co}^2 - n_{cl}^2} \frac{Ko(W \cdot d/a)}{K_1{}^2(W)}$$

Therefore, when the wavelength dispersions of the core and the cladding are so selected that the value

$$\frac{n_{co}}{n_{co}^2 - n_{cl}^2} \qquad \frac{Ko(W \cdot d/a)}{K_1{}^2(W)}$$

counteracts the variation of the wavelength of incident light $\lambda$ ($= \frac{2\pi}{K}$), the coupling coefficient C becomes a constant regardless of the wavelength of the incident light λ.

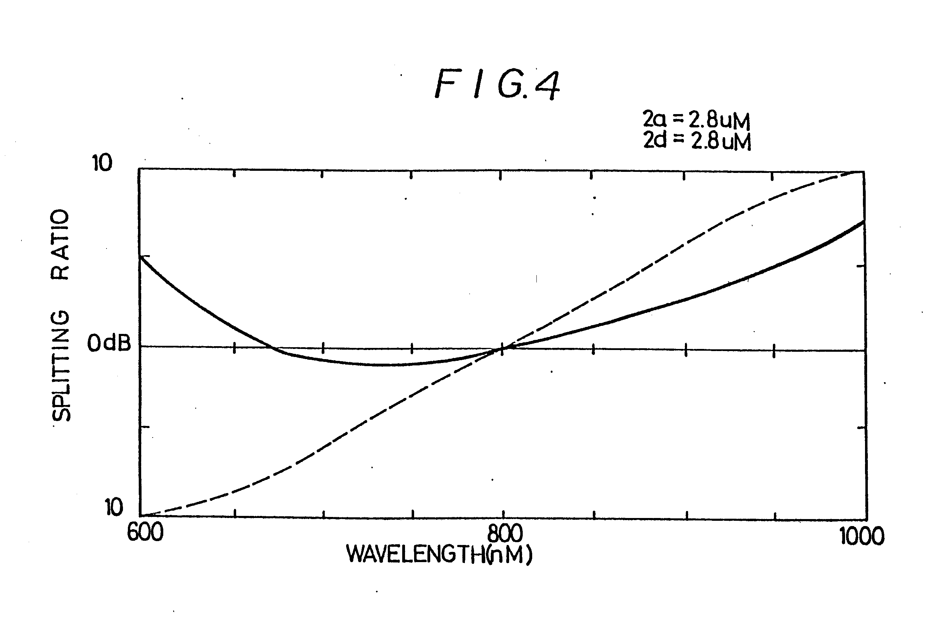

The broken line in Figure 3 shows the coupling coefficient of known materials whose refractive indices are almost the same as those of the above-mentioned materials at a wavelength of 0.8μm and whose refractive index difference is almost non-wavelength dependent. In contrast to the coupling coefficient change in the known structure as shown by the broken line, the coupling coefficient change of the embodiment of the invention, as shown by the solid line, is remarkably small at a wavelength of about between 0.64μm and 0.85μm. The solid line in Figure 4 shows calculated values of the splitting ratio at the two output terminals of a 3dB optical coupler (splitting ratio of 1:1) which may be formed by a construction according to the present invention.

The splitting ratio R is given as follows:

$$(4) \quad R = 10 \log \frac{c^2 \sin^2 \beta_c z}{\delta^2 - (C \cos \beta_c z)^2}$$

where δ is a value equivalent to a half of the difference of propagation coefficients between the two optical fibres in the fundamental mode, C is the above-mentioned coupling coefficient, Z is the effective coupling length, and $\beta_c$ is given by

$$\beta_c = \sqrt{\delta^2 + c^2}$$

Both of the optical fibres used in this embodiment consist of the same materials, and therefore δ = 0, and the splitting ratio R is given as follows:

R = 10 log tan $^2\beta_c$ Z

= 10 log tan²C Z

As described above, when the coupling coefficient C is so arranged as not to be wavelength-dependent, the splitting ratio R becomes less wavelength-dependent. The splitting ratio obtained in this embodiment is around ±1 dB over the wavelength between 0.65μm and 0.85μm. On the contrary, a construction using known materials has the characteristic shown by the broken line in Figure 3, where the wavelength range covering the splitting ratio ±1 dB is very narrow.

The materials which may be used for the present invention are not limited to those described in the foregoing embodiment, any combination of materials by which the same characteristics are obtained can be selected.

As described, therefore, the present invention provides an optical coupler which has little dependence on wavelength and, with a low excess loss, is suitable for spectral measurement and multiple wavelength transmission.

## Claims

1. An optical wave guide having at least one wave guide portion (1) which is clad by a cladding portion (2) between whose refractive index and that of the wave guide portion (1) there is a refractive index difference characterised in that the refractive index difference increases as the wavelength of the light propagated through the wave guide increases.

2. An optical wave guide as claimed in claim 1 characterised in that the wave guide is an optical coupler having a plurality of parallel wave guide portions (1) each of which is clad by a cladding portion (2).

3. An optical wave guide as claimed in claim 1 or 2 characterised in that the or each wave guide portion (1) clad by a cladding portion (2) is constituted by optical fibre material.

4. An optical wave guide as claimed in claim 1 or 2 characterised in that the or each wave guide portion (1) comprises a planar optical guide.

5. An optical wave guide as claimed in any preceding claim characterised in that the optical wave guide is an optical coupler whose coupling coefficient (C) remains substantially constant over a wavelength range of at least 0.2μm.

6. An optical wave guide as claimed in any preceding claim characterised in that the optical wave guide is an optical coupler having a splitting ratio (R) of substantially ±1 over a wavelength range of at least 0.2μm.

7. A photo-optical coupler comprising at least two optical wave guides composed of photo fibres or planar photo guides which are adjacently placed in parallel with each other, said optical wave guide having a wave guide portion and a cladding portion, wherein the refractive index difference between the material used for said wave guide portion and the material used for said cladding portion increases according to the increase of the wavelength propagating within said optical wave guides.

# FIG.1

# F I G. 2

1 GUIDE (CORE)

2 CLADDING

2 CLADDING

2a    2d    2a

F I G. 3

0 269 365

# F I G.4

$2a = 2.8 uM$
$2d = 2.8 uM$

0 269 365